(19) **Europäisches Patentamt**
**European Patent Office**
**Office européen des brevets**

(11) **EP 2 744 656 B1**

(12) **EUROPEAN PATENT SPECIFICATION**

(45) Date of publication and mention
of the grant of the patent:
**27.03.2019 Bulletin 2019/13**

(51) Int Cl.:
**B32B 27/08** (2006.01)

(21) Application number: **12823947.2**

(86) International application number:
**PCT/US2012/050681**

(22) Date of filing: **14.08.2012**

(87) International publication number:
**WO 2013/025666 (21.02.2013 Gazette 2013/08)**

(54) **ORIENTED TAPE FOR THE PRODUCTION OF WOVEN FABRICS AND PRODUCTS PRODUCED THEREFROM**

ORIENTIERTES BAND FÜR DIE HERSTELLUNG VON GEWEBEN UND DARAUS HERGESTELLTE PRODUKTE

BANDE ORIENTÉE POUR LA PRODUCTION DE TISSUS TISSÉS ET PRODUITS FABRIQUÉS À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2011 US 201161523480 P**
**26.10.2011 US 201161551481 P**
**17.07.2012 US 201213550637**

(43) Date of publication of application:
**25.06.2014 Bulletin 2014/26**

(73) Proprietor: **Greif Flexibles Trading Holding B.V.**
**2316 XC Leiden (NL)**

(72) Inventors:
• **LEHMANN, Wolfgang**
**78073 Bad Duerrheim (DE)**
• **HEMMER, Jefffrey, L.**
**Santa Claus, IN 47579 (US)**

• **MOUNTE, Eldridge, M.**
**Canandaigua, NY 14424 (US)**

(74) Representative: **Bourgeois, Christian**
**Dieselweg 29**
**59379 Selm (DE)**

(56) References cited:
**US-A- 4 221 882       US-A- 5 152 946**
**US-A- 5 759 462       US-A1- 2004 026 818**
**US-A1- 2008 114 130    US-A1- 2008 258 333**
**US-A1- 2008 268 737    US-A1- 2010 152 391**
**US-A1- 2011 105 667    US-B2- 6 762 226**

• **AMERICAN PEANUT COUNCIL FLEXIBLE INTERMEDIATE BULK CONTAINER (FIBC) SPECIFICATIONS 2004, XP008173269**

**Description**

**BACKGROUND OF THE INVENTION**

1. Field of Invention

The present invention relates to an oriented tape including high density polyethylene and polypropylene, woven cloths made therefrom, and end products of commercial use in packaging applications, and applications such as ground cover.

2. Description of Related Art

Flexible intermediate bulk containers (FIBCs) utilize various fabrics (such as woven polypropylene and PVC coated fabrics) and various fabric weights and sewing methods, depending on the necessary strength of the bag and its desired factor of safety. Such bags vary in size to generally hold from 5 to 120 cubic feet of material and up to about 6,000 pounds of product. They generally can be designed with various shaped tops suitable for filling, can have a solid bottom or a sewn-in discharge spout configuration, and have lifting handles. For dry or fluidized products that require a more rigid bag for stability, solid support inserts may be placed inside the bag, and between the outer bag surface and a liner (if one is used) to provide the bag's sidewalls with more rigidity. US-A-2010152391 discloses oriented polyolefin tapes comprising polypropylene and high-density polyethylene (HDPE).

**BRIEF SUMMARY OF THE INVENTION**

It has been discovered that an oriented polyolefin tape, comprising a blend of 5 wt% to 35% polypropylene (PP), with 65 wt% to 95% high density polyethylene (HDPE), with or without minor components of additives, when melt blended, such as in a single screw extruder as practiced here or in a comparable extrusion system such as a twin screw extruder, cast and machine direction (MD) oriented, produces a slit tape with mechanical properties which are superior to oriented tapes produced in the same manor from the individual HDPE or PP resins. That when woven into fabrics that the fabric properties are superior in physical properties to fabrics woven from the tapes produced either from the HDPE or from the PP resin alone and that FIBC bags produced with the woven fabric also demonstrate the superior performance of the individual tapes. It was also discovered that the weaving properties of the blended tapes are superior to those of 100% PP or PE tape.
Selection of the HDPE/PP pairs are based upon the relative melt viscosity of the resin pairs used to control the production of a desired fibrous morphology for the dispersed PP phase in the HDPE continuous phase.
The tapes of the invention can be further improved in weaving and physical property performance by the addition of a co-extruded a layer of HDPE to the surfaces of the oriented tape of the invention.
It has also been discovered that the UV stability of the blended tape is significantly improved in comparison to the 100% PP tapes allowing for at least a 50% reduction in UV additive concentrations in the blend tapes and subsequent fabric. As the use of UV additives result in a loss of physical strength of the oriented tapes, this result can be used to reduce the additive concentration giving further physical property improvement at comparable levels of UV resistance performance. UV stability was measured according to norm SR EN 21898/Annex A. Successful passage of the test is that a tape retains 50% of its initial strength and elongation properties at 200 hours exposure.
The tapes of the invention can be woven into fabrics which can be fabricated into containers such as bags, including FIBC bags, shipping sacks and dunnage bags. Other useful products such as ground cover; geotextiles, such as those used to line waste dumps, holding ponds and settling ponds; straps and ropes can be made from the tapes of the invention. This woven fabric and other products produced from the woven fabric have an improved hand and fabric softness which will be an improvement in the perception of the fabric and bags and other articles of commerce produced from the woven fabric. It can offer efficiency improvement in the bag fabrication step, in terms of time to make the bag and safety from less rigid fabric.
The bags made from the woven fabric of the blended tapes have a broader usable temperature range for customer use than either the PP or PE only bags. In particular this will provide benefits for high temperature filling of pure PE bags and low temperature storage & usage of PP only bags.
The tapes and containers of the invention may also be made electrically conductive. For instance, any tape, woven cloth or fiber herein may further comprise electrically conductive filaments including conductivity increasing additives to render the product electrically conductive. The conductivity increasing additive may include at least one of carbon black, graphite, a metal such as silver, platinum, copper, aluminum, and others, an intrinsically conducting polymer (ICP) such as polyaniline, polyacetylene, polyphenylene vinylene, polythiophene, polyphenylene sulfide, and others.
Due to the superior strength observed for the blended tapes it should be possible to decrease the thickness of the tapes while matching the existing physical properties requirements of FIBC bags currently used. Alternatively the strength of the bags may be increased allowing a producer to develop new customer end-use applications.

BRIEF DESCRIPTION OF THE DRAWINGS

Figure 1 is a graphical depiction of tape elongation at Fmax as a function of tape strength.

Figure 2 is a graphical depiction of the viscosity as a function of shear rate of several tapes.

Figure 3 is a graphical depiction of % retained strength as a function of UV exposure time.

Figure 4 is a graphical depiction of % retained elongation as a function of UV exposure time.

Figure 5 depicts the compression burst strength of several tapes.

Figure 6 depicts the 30 cycle compression burst strength of several tapes.

Figure 7 is a graphical depiction of the viscosity as a function of shear rate of several tapes.

Figure 8 is a graphical depiction of the strength of a tape as a function of the Melt Index at 190 °C of the HDPE used therein, using design units.

Figure 9 is a graphical depiction of the strength of a tape as a function of the Melt Flow at 210 °C of the polypropylene used therein, using design units.

Figure 10 is a graphical depiction of the strength of a tape as a function of the Melt Index at 190 °C of the HDPE used therein.

Figure 11 is a graphical depiction of the strength of a tape as a function of the Melt Flow at 210 °C of the polypropylene used therein using design units.

Figure 12 is a graphical depiction of the elongation of a tape as a function of the Melt Index at 190 °C of the HDPE used therein, using design units.

Figure 13 is a graphical depiction of the elongation of a tape as a function of the Melt Flow at 210 °C of the polypropylene used therein, using design units.

Figure 14 is a graphical depiction of the elongation of a tape as a function of the Melt Index at 190 °C of the HDPE used therein.

Figure 15 is a graphical depiction of the elongation of a tape as a function of the Melt Flow at 210 °C of the polypropylene used therein.

Figure 16 is a graphical depiction of the strength of a tape as a function of the Melt Index of the HDPE used therein using design units.

Figure 17 is a graphical depiction of the strength of a tape as a function of the Melt Flow of the polypropylene used therein using design units.

Figure 18 is a graphical depiction of the elongation of a tape as a function of the Melt Index of the HDPE used therein using design units.

Figure 19 is a graphical depiction of the elongation of a tape as a function of the Melt Flow of the polypropylene used therein using design units.

**DETAILED DESCRIPTION OF THE INVENTION**

The present invention is defined by the claims. Broadly, the invention relates to an oriented tape comprising polypropylene, high density polyethylene, optional compatibilizers, and optional fillers such as reinforcing fillers, UV additives, and a process of making the tape as well as woven articles made from the tape. Use of the tapes and woven articles of the invention is envisioned also. The invention includes a process of making an oriented tape. Each component, process, and use is described hereinbelow.

The oriented tape comprises polypropylene and high density polyethylene. The polypropylene may be isotactic or syndiotactic. The polypropylene (PP) useful herein has a melt flow index (MFI) at 230 °C/ 2.16 kg of 0.5-8, preferably 1-7, and successively more preferably 1.2-6; 1.5-4; 1.6-3; 1.7-2.5; and 1.8-2.2. Most preferably, the polypropylene MFI is 1.9-2.1. The Melt Flow Index (MFI), or Melt Flow Rate (MFR), (used interchangeably) is determined according to ISO 1133, or ASTM 1238-04c, "Standard Test Method for Melt Flow rates of Thermoplastics by Extrusion Plastometer," as known in the art. When other sources of polypropylene are used, useful alternate polypropylene MFIs include 2.2-3.8 and successively more preferably: 2.4-3.6; 2.6-3.4; and 2.8-3.2. In this alternate embodiment, the most preferable polypropylene MFI is 2.9-3.1. The density of polypropylene useful herein may be 0.890.-0.946 g/cc, preferably 0.895-0.940; successively more preferably: 0.90-0.935; 0.905-0.930; and 0.905-0.928. Most preferably, the polypropylene density is 0.905-0.915.

Polypropylenes made by Ziegler-Natta or metallocene catalysis and in combination with any co-catalyst, modifiers and/or catalyst support are suitable in the present invention. Any known polymerization technique may be used to produce the polypropylenes useful in the invention, for example bulk, gas phase and bulk/gas combination polymerization. Commercial manufacturers and/or sellers of polypropylene useful herein include from Saudi Basic Industries Corporation (Sabic) ; LyondellBasell Industries, Braskem, Mitsui Chemical, Inc, ExxonMobil Chemical, Borealis AG; Unipetrol Deutschland, GmbH. Reliance Industries, Ltd., , and others. Suitable polypropylenes herein include those sold under the Mosten ™ trademark from Unipetrol Deutschland GmbH such as Mosten ™ TB002 and Reliance H030SG, available from Reliance Industries Ltd, as well as other polypropylene products commercially available.

The high density polyethylene (HDPE) useful herein has a melt flow index at 190°C/ 2.16 kg of 0.1-3.5, more preferably 0.15-3. The HDPE MFI is successively more preferably 0.17-2.5; 0.17-2; 0.17-1.5; and 0.17-1.25. Most preferably, the HDPE MFI is 0.17-0.95. The density of high density polyethylene useful herein is 0.941-0.997 g/cc, and successively more preferably 0.943-0.985; 0.947-0.980; 0.950-0.975; and 0.953-0.970. Most preferable is HDPE with a density of at least 0.955 g/cc. High density polyethylene made by Ziegler-Natta, chromium or metallocene catalysis and in combination with any co-catalyst, modifiers and/or catalyst support are suitable in the present invention. Any known polymerization technique may be used to produce the polyethylene useful in the invention, for example gas phase, slurry and solution polymerization.

Commercial manufacturers and/or sellers of high density polyethylene useful herein include Saudi Basic Industries Corporation (Sabic); LyondellBasell Industries; Borealis AG; ExxonMobil Chemical, Chevron Phillips Chemical, INEOS Polyolefins, TVK Polska, Slovnaft and others. Specific suitable high density polyethylenes include those sold under the Sabic™, Basell™, Tipelin™ and Borealis™ trademarks from the companies of the same names above, for example, Sabic™ FO4660, and Borealis™ VS5580 as well as and other high density polyethylene products commercially available.

A summary of the properties of several selected resins and fillers appears in Table 1.

Table 1. Resin and filler properties.

| Resin Name | Resin type | MFI @ 190/2.16kg gm/10min | MFI @ 190/5kg gm/10min | MFI @ 230/2.16kg gm/10min |
|---|---|---|---|---|
| Tipelin FS471-02 | HDPE | 0.17 | n.a. | n.a. |
| Borealis VS5580 | HDPE | 0.95 | n.a. | n.a. |
| Basell 7740F2 | HDPE | n.a | 1.8 | n.a. |
| Ineos A4009MFN1325 | HDPE | 0.9 | n.a. | n.a. |
| Sabic FO4660 | HDPE | 0.70 | n.a. | n.a. |
| MOSTEN TB002 | PP | n.a. | n.a. | 2.0 |
| Reliance H030SG | PP | n.a. | n.a. | 3.0 |
| PP79021/20UV | 20% UV stabilized concentrate | n.a. | n.a. | n.a. |
| WPT1371 | 70% CaCO3 concentrate | n.a. | n.a. | n.a. |

The proportions of polypropylene (PP) and high density polyethylene (HDPE) in the melt blend can be 5-35 wt% PP and 65-95 wt% HDPE; alternately 10-30 wt% PP and 70-90 wt% HDPE; alternately 12.5-25 wt% PP and 75-87.5 wt% HDPE, alternately 15-22.5 wt% PP and 77.5-85 wt% HDPE.

Fillers and additives. A variety of fillers and additives can be used in producing the oriented tapes of the invention. Fillers are added to change physical properties of a thermoplastic material, such as whiteness, coefficient of friction, and stiffness. Filler materials useful in the present invention include hard clays, soft clays, chemically modified clays, mica, talc, calcium carbonate, dolomite, titanium dioxide, amorphous precipitated hydrated silica and mixtures thereof. Other filler materials are known in the art. $CaCO_3$ masterbatch concentrates in a polyolefin such as polyethylene or polypropylene are suitable in the present invention.

Flame retardant fillers may be used. Useful flame retardant fillers include bayerite aluminum hydroxide, gibbsite aluminum hydroxide, boehmite, magnesium hydroxide, phosphorus or organophosphorus compounds, melamine cyanurate, antimony oxide; and/or halogenated organic compounds such as dipentaerithritol, tetrabromobisphenol A carbonate oligomer, brominated polystyrene, melamine cyanurate, brominated phenoxy polymers, dioctyl tetrabromo terephthalate, decabromodiphenyloxide, tetrabromobisphenol A, brominated polymeric epoxy, polydibromophenylene oxide, and others. Flame retardants may be used in an amount of up to 5 wt%, alternately 0.1-5 wt%, alternately 0.5-3 wt%, alternately 1-2.5 wt%.

Functional additives may be included in the melt blend to impart desired properties to the final extruded tape or cloth woven therefrom.

One type of additives, UV additives, also known as UV inhibitors serve to limit or eliminate the detrimental effects of high-energy ultraviolet radiation on thermoplastic compositions by absorbing the radiation. The tapes of the invention typically include, at the melt-blend stage, up to 3 wt% of at least one UV additive.

UV additives useful in the practice of the present invention include hindered amines, substituted hydroxyphenyl benzotriazoles, carbon black, benzophenone, barium metaborate monohydrate, various phenylsalicylates, nickel dibutyl dithiocarbamate, phenylfonnamidine, titanium dioxide, and others. The inventors herein have found that the polymer blend of the invention requires less UV additive to achieve similar or superior UV resistance to prior art polymer blends. The polymer blends of the invention can require as much as 10% less, and successively more preferably 20% less, 30% less, and 40 % less UV additive than prior art blends. Most preferably, 50% less UV additive is required, as compared to a similar composition including polypropylene.

Fillers and additives can be added directly to a melt blend (neat), or as is commonly practice added in a masterbatch form that contains a polyolefin "carrier" that can be added to the melt blend. Fillers and additives may be added in the extruder. In the masterbatch, a PP or PE carrier, containing between 10-80% of the filler or additive, is used to deliver the filler or additive to the melt blend.

Accordingly, the melt blend may include 0-30 wt% of at least one filler, alternately 0-20 wt%. Other alternate or preferable ranges of filler that are useful include 0.1-20 wt%, 0-15 wt%, 0.1-15 wt%, 2-6 wt%, 1.6-4.8 wt%, 0-5 wt%, 0.1-5 wt%, 0.1-4 wt%, 2-4 wt%, 2-3 wt% , 0.5-3.5 wt%, 0.75-3.5%, and 1-3 wt%. Fillers may be added neat or as masterbatch. Useful fillers include $CaCO_3$.

Additives, such as UV additives, additives useful herein may be delivered neat or in a masterbatch as discussed for fillers hereinabove. Tapes of the invention typically include, at the melt-blend stage, up to 3 wt% of at least one additive, for example 0.1 to 3 wt%. Other alternate or preferable ranges of additives include 0.1 to 2.5 wt%, 0.75-2 wt%, 0-1 wt%, 0.05-0.4 wt%, 0.05-1 wt%, 0.075-0.75 wt%, 0.1-0.5 wt%, 0.08-0.15 wt%. In another embodiment, the melt blend may contain no greater than 0.2 wt% neat of an additive such as a UV additive.

For all additives and fillers noted herein, it is envisioned, that any amount listed, whether delivered as masterbatch or neat, may be delivered in the other form to provide the same ultimate amount of active ingredient. For those ranges of fillers and additives not specified as masterbatch or neat, the presumption is that the filler is added neat.

An embodiment of the invention is an oriented polyolefin tape comprising an extruded and stretched melt blend comprising the components: (a) 5 to 35 wt% 0.5-8 MFI (230°C/2.16kg) polypropylene, (b) 65 to 95 wt% 0.3-3.5 MFI (190°C/2.16kg) of high density polyethylene, (c) 0-30 wt% of at least one filler, (d) 0-3 wt% of at least one additive, and (e) 0-5 wt% of at least one compatibilizer. In one embodiment, the total of the components does not exceed 100 wt%. Preferably, the total of components (a) - (e) does not exceed 100 wt%.

The process of the invention involves several parameters. Broadly, the invention includes a process of making an oriented polyolefin tape comprising: (a) melt blending the components (i) 5 to 35 wt% 0.5-8 MFI (230°C/2.16kg) polypropylene and (ii) 65-95 wt% 0.1-35 MFI (190°C/2.16kg) high density polyethylene to form a melt blend, (iii) 0-30 wt% of at least one filler, (iv) 0-3 wt% of at least one additive, (v) 0-5 wt% of at least one compatibilizer, (b) extruding the melt blend at 220-295 °C through a die to form an extrudate, (c) water quenching the extrudate, (d) slitting the extrudate to form at least one tape, and (e) heating and stretching the at least one tape at 50-500 m/min and 80-140 °C. Preferably, the total of the components does not exceed 100 wt%; more preferably the total of the components (i)-(v) does not exceed 100 wt%.

The polypropylene, high density polyethylene and optional additives (filler, UV additive and compatibilizer) are melt blended at a melt temperature of 200-300 °C, preferably 220-295 °C, more preferably 225-290°C, and successively more preferably 235-285, 240-280 and 245-275°C. Most preferably, the melt blending is undertaken at 250-275°C.

The melt blend is produced by charging the extruder with a mixture of solid pellets which are melted and blended by the extruder. The extruder may be single screw or twin screw. The extruder typically includes at least one of each of filter, melt pipe and die, such as a slot die. Melt pipes and dies are set to temperature ranges in the preceding paragraph. Useful extruders, include those commercially available from Starlinger GmbH, Vienna, Austria, Bag Solutions Worldwide, Vienna Austria, Yong Ming Machinery Manufacturing Co., Ltd, China.

Extruder screw speeds can vary, but are typically 25-250 rpm, preferably 50-200, more preferably 75-175 rpm, and yet more preferably 100-150 rpm. The slot die has a slot gap of 0.1-3 mm, preferably 0.2-1.5 mm, more preferably 0.25-1.0 mm, still more preferably 0.3-0.7mm, yet more preferably 0.4-0.7 mm. In other embodiments, the die gap is 0.01 to 0.1 inches (0.254 to 2.54 mm). The melt blend is cast through the slot die into a water bath having a temperature of 20-60 °C, preferably 25-55 °C, more preferably 30-50 °C, still more preferably 35-45 °C. The gap between the slot die and the water bath is 10-150 mm, preferably 20-100 mm, more preferably 20-80 mm, still more preferably 20-75 mm even more preferably 30-50 mm, yet more preferably 30-40 mm, still more preferably 35-40 mm.

A cast sheet results, which has a thickness of 50-250 microns, preferably 60-240 microns, more preferably 70-230 microns, yet more preferably 80-220 microns, still more preferably 100-200 microns. The cast sheet is produced at a speed of about 30-70 m/min, preferably 35-65 m/min, more preferably 40-60 m/min, still more preferably 45-55 m/min. A cast sheet is slit with one or more knives into a plurality of tapes, such as 2-350. The tapes are then stretched through a hot air oven and stretched (or drawn) over a series of Godet rolls. The tapes may be stretched over Godet rolls both before in and after the oven, or only in or after the oven. The Godet rolls may precede or follow the oven. The hot air oven may have an air temperature of 80-150 °C, preferably 90-140 °C, more preferably 100-130 °C, for example 115-125 °C, or 120-130 °C, which are lower temperatures than required for stretching pure polypropylene fibers. The stretching over the Godet rolls may be at a ratio of 2:1-10:1, preferably 3:1-9:1; more preferably 4:1-8:1, still more preferably 5:1-8:1. The tapes after stretching are wound on bobbins. The tapes are wound onto the bobbins at an angle of no greater than 8 degrees, preferably 3-8 degrees, preferably less than 6 degrees, preferably 4-5.5 degrees, more preferably 4.5-5.5 degrees. The final tapes wound onto the bobbins have a width of 0.5-5 mm, preferably 1-4.5 mm, more preferably 1.5-4 mm, yet more preferably 2-3.5 mm.

The tapes have surfaces that are flat or profiled, which results from the use of either of two types of die lips, flat or profiled. An advantage of the smooth tapes is that the denier can be adjusted more exactly. Conversely, an advantage of the profiled tapes is that the tape slips less (on the bobbin and after weaving in the fabric). Accordingly, it is envisioned that any tape in any embodiments herein may be flat or profiled.

The flat or profiled tapes have as-extruded width and thickness dimensions that are related to the final dimensions through the stretch ratio according to the relation that the final width (thickness) is the original width (thickness) divided by the square root of the stretch ratio. The stretch ratio is the ratio of the final tape speed as wound onto a bobbin divided by the cast tape speed. The tapes have a final thickness of less than 250 microns, preferably 10-250 microns, more preferably 15-200 microns, still more preferably 25-150 microns, yet more preferably 25-125 microns, and most preferably 25-75 In an alternate embodiment, the tapes have a thickness no greater than 250 microns, and successively more preferably < 225, < 220, <200, <175, <150, <125, <100, <75, <50, and <40 microns.

The tapes have an average weight of 700-2200 denier, preferably 800-1800, more preferably 900-1700. The tapes have a tenacity of 4-10 gm/denier, preferably 5-10 gm/denier, more preferably 6-10 gm/denier. The tapes have an elongation to break of 15-35%, preferably 20-30% more preferably 22.5-27.5%, and a residual shrinkage of less than 10%, preferably less than 5%, more preferably less than 4%, yet more preferably less than 3%, still more preferably less than 2%.

Without being bound by a particular theory, the Inventors believe that the source of the increased physical properties of the HDPE/PP blend tapes is the production of oriented and crystallized PP fibrils within the HDPE matrix. That this is demonstrated in Table 2.

Exemplary compositions formulated according to the principles of the invention bear out this belief, showing a high melting point of 168°C observed for the PP component of (b) as compared to the second heat melting point of 162°C observed for the PP by DSC (differential scanning calorimetry) in the second heat of (b). Also, this is to be compared to the DSC first heat melting point of 164°C observed for the PP component in the cast sheet (i.e., "base sheet") from which the drawn tapes were produced. DSC was performed per ASTM D 3418-08. Samples were heated at 10°C/min from 35°C to 275°C, held at 275°C for 5 minutes, cooled to 35°C at 10°C/min, held at 35°C for 5 minutes, then reheated to 275°C at 10°C/min. All testing was performed in a nitrogen environment.

Table 2: DSC melting data from three production tapes (temp. in °C)

| Sample | HDPE peaks | | PP peaks | |
|---|---|---|---|---|
| | 1st heat | 2nd heat | 1st heat | 2nd heat |
| Base Sheet | 129 | 133 | 164 | 162 |
| 75% Sabic F04660 25% PP Production #1 | 136 | 132 | 168 | 162 |
| 75% Sabic F04660 25% PP + UV Production #2 | 136 | 132 | 167 | 162 |
| ELTEX 31694 Production #3 | 137 | 132 | not present | not present |

The increased PP first heat melting points of both the cast sheet and drawn tapes indicate a significantly increased level of molecular orientation and crystallization in the PP phase of the blend. The presence of highly oriented PP fibrils in the HDPE matrix would result in a PP fiber reinforced HDPE matrix which is believed to be the ultimate source of the superior strength of the blend tapes. It is believed that the PP domains in the blend are more highly oriented in the HDPE matrix as compared to commercial tapes due to the PP fibril orientation at the HDPE tape orientation temperatures which are significantly lower than the orientation temperatures typical of PP tape orientation and at higher effective stretch ratios which were achieved with the HDPE.

The increased first melting point of the HDPE in the matrix also indicates an increased level of orientation in the HDPE relative to the cast sheet.

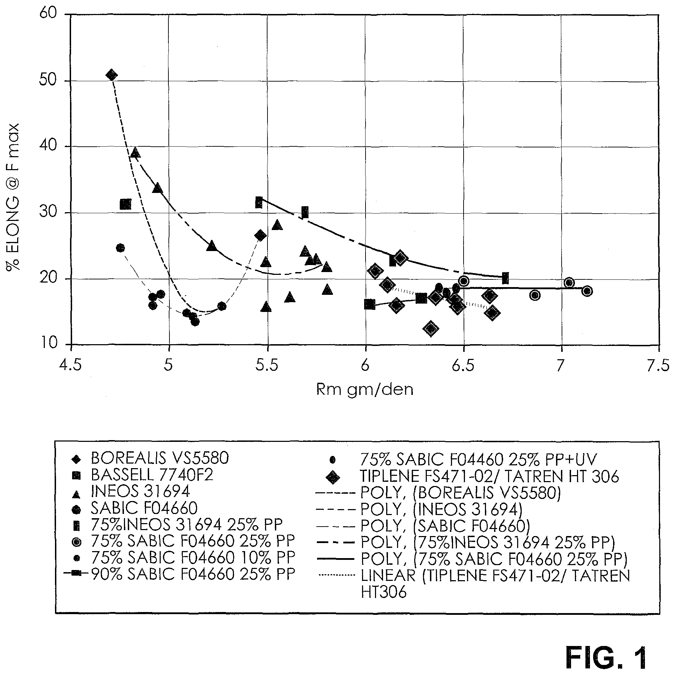

The impact of the blend and the choice of HDPE resins on tape properties are seen in Figure 1 where the tape % elongation to break is plotted against strength as measured in gm/den. Figure 1 clearly compares the increase in strength to the 100% HDPE matrix from 5 to 5.5 gm/den to 6.5 to 7.5 gm/den with the incorporation of the 10% and 25% PP into the tape. While 25% PP results in stronger tapes than the 10% PP addition, the use of 10% increases the tape strength sufficiently to make it competitive in strength with 100% PP tapes. It appears that the strength to cost ratio can be controlled by the variation in % PP added and that any decrease in strength due to the incorporation of the UV concentrate can be offset by the variation in % PP added to the blend and perhaps with further optimization of the HDPE, PP resins and/or masterbatch base resin properties.

Table 3. Data for Summary Plot of Figure 1.

| sample | Resin | MDXf | MDX1 | W0 | t0 | W | t | den | Rm, N | Rm cN/tex | Rm g/den | % elong Fmax | % elong break | % shrink |
|---|---|---|---|---|---|---|---|---|---|---|---|---|---|---|
| 1 | Borealis VS5580 | 6 | 6.3 | 8.75 | 96.5 | 3.2 | 40 | 998 | 46.06 | 41.54 | 4.71 | 50.67 | 51.87 | 8 |
| 1.1 | VS5580 | 6.5 | 6.8 | 8.75 | 100.4 | 3.2 | 41 | 1018 | 47.77 | 42.23 | 4.79 | 40.19 | 40.3 | 7.5 |
| 1.2 | VS5580 | 7 | 7.5 | 8.75 | 104.2 | 3 | 41 | 1018 | 52.92 | 46.78 | 5.3 | 16.51 | 26.15 | 6.3 |
| 1.3 | VS5580 | 7.5 | 8 | 8.75 | 107.9 | 3.1 | 45 | 1033 | 55.38 | 48.25 | 5.47 | 26.67 | 39.11 | 6.5 |
| 2 | Bassell 7740F2 | 4.5 | 4.8 | 8.75 | 83.5 | 3.65 | 37 | 1022 | 47.91 | 42.19 | 4.78 | 31.37 | 32.98 | 7.7 |
| 2.1 | 7740F2 | 5 | 5.4 | 8.75 | 73.9 | 2.9 | 38 | 1059 | 52.74 | 44.82 | 5.08 | 20.53 | 28.55 | 8.1 |
| 3 | INEOS 31694 | 6 | 6.4 | 8.75 | 96.5 | 3.1 | 38 | 989 | 45.39 | 42.64 | 4.83 | 39.7 | 44.11 | 5.5 |
| 3.1 | ELTEX 31694 | 6.5 | 7 | 8.75 | 100.4 | 3.3 | 37 | 958 | 47.87 | 43.56 | 4.94 | 33.56 | 42.82 | 5.1 |
| 3.2 | ELTEX 31694 | 7 | 7.5 | 8.75 | 104.2 | 3.1 | 42 | 1034 | 52.19 | 45.43 | 5.15 | 24.04 | 39.06 | 5.2 |
| 3.3 | ELTEX 31694 | 7.5 | 8 | 8.75 | 107.9 | 2.95 | 42 | 1030 | 55.46 | 48.46 | 5.49 | 22.64 | 34.85 | 4.9 |
| 6 | ELTEX 31694 | 7.5 | 7.5 | 8.75 | 103.3 | 3 | 44 | 1050 | 53.75 | 46.07 | 5.22 | 24.74 | 27.39 | 8.9 |
| 6.1 | ELTEX 31694 | 8 | 8 | 8.75 | 106.7 | 2.9 | 41 | 990 | 54.4 | 49.54 | 5.61 | 17.21 | 28.53 | 8.5 |
| 6.2 | ELTEX 31694 | 8.2 | 8.2 | 8.75 | 108.0 | 2.8 | 43 | 983 | 55.91 | 51.19 | 5.8 | 18.42 | 26.32 | 8.2 |
| 6.3 | ELTEX 31694 | 8 | 8 | 8.75 | 106.7 | 2.9 | 42 | 1007 | 56.49 | 50.49 | 5.72 | 22.84 | 32.48 | 7.8 |
| 6.4 | ELTEX 31694 | 8 | 8 | 8.75 | 106.7 | 2.85 | 43 | 999 | 56.85 | 51.22 | 5.8 | 21.73 | 36.19 | 7.2 |
| 6.5 | ELTEX 31694 | 8 | 8 | 8.75 | 106.7 | 2.8 | 42 | 995 | 56.1 | 50.74 | 5.75 | 22.8 | 39.05 | 6.1 |
| (c) | ELTEX 31694 | 7.6 | 7.6 | 8.5 | 99.82 | 2.8 | 43 | 1043 | 56.24 | 48.53 | 5.5 | 15.74 | 32.89 | 6.5 |
| (c) | ELTEX 31694 | 7.6 | 7.6 | 8.5 | 99.82 | 2.85 | 40 | 989 | 55.14 | 50.18 | 5.69 | 24.06 | 36.42 | 6.1 |
| (c) | ELTEX 31694 | 7.6 | 7.6 | 8.5 | 99.82 | 2.85 | 41 | 1009 | 54.9 | 48.97 | 5.55 | 28.18 | 37.18 | 6.1 |
| 4 | SABIC F04660 | 6 | 6.4 | 8.75 | 96.5 | 3.15 | 35 | 995 | 44.58 | 42.01 | 4.76 | 24.77 | 44.5 | 3.5 |
| 4.1 | SABIC F04660 | 6.5 | 7 | 8.75 | 100.4 | 3.05 | 38 | 1019 | 49.74 | 43.93 | 4.98 | 17.39 | 37.08 | 3.6 |
| 4.1.1 | SABIC F04660 | 6.5 | 6.8 | 8.75 | 100.4 | 3.05 | 41 | 1063 | 51.35 | 43.47 | 4.93 | 17.07 | 36.55 | 3.8 |
| 4.1.1 @ 24 hrs | | 6.5 | 6.8 | 8.75 | 100.4 | 3.05 | 41 | 1056 | 54.65 | 46.57 | 5.28 | 15.8 | 29.17 | 3.8 |

| Sample | Resin | MDX f | MDX 1 | W0 | t0 | W | t | den | Rm, N | Rm cN/tex | Rm g/den | elong Fmax, % | % elong break | % shrink |
|---|---|---|---|---|---|---|---|---|---|---|---|---|---|---|
| 5 | SABIC F04660 | 6.5 | 6.5 | 8.75 | 96.19 | 3.1 | 35 | 936 | 47.28 | 45.46 | 5.15 | 14.5 | 30.43 | 6.3 |
| 5.1 | SABIC F04660 | 6.7 | 6.7 | 8.75 | 97.66 | 3.05 | 43 | 1075 | 53.76 | 45 | 5.1 | 14.94 | 30.85 | 6.2 |
| 5.2 | SABIC F04660 | 6.9 | 6.9 | 8.75 | 99.1 | 3 | 40 | 1040 | 52.48 | 45.42 | 5.15 | 13.68 | 32.62 | 6.9 |
| 5.3 | SABIC F04660 | 6.5 | 6.5 | 8.75 | 99.1 | 3 | 41 | 1060 | 51.15 | 43.43 | 4.92 | 15.78 | 31.81 | 6.1 |
| 7 | 75%INEOS 31694 25% PP | 7 | 7 | 8.75 | 99.82 | 2.8 | 42 | 926 | 49.56 | 48.17 | 5.46 | 31.65 | 32.4 | 6.1 |
| 7.1 | 75%ELTEX 31694 25% PP | 7.5 | 7.5 | 8.75 | 103.32 | 3.3 | 35 | 944 | 52.64 | 50.19 | 5.69 | 30.07 | 33.24 | 7 |
| 7.2 | 75%ELTEX 31694 25% PP | 8 | 8 | 8.75 | 110.27 | 3.1 | 37 | 948 | 57.08 | 54.19 | 6.14 | 22.8 | 26.01 | 6.1 |
| 7.3 | 75%ELTEX 31694 25% PP | 8.2 | 8.2 | 8.75 | 111.64 | 3.1 | 37 | 897 | 59 | 59.19 | 6.71 | 20.18 | 27.74 | 4.8 |
| 8 | 75%ELTEX 31694 25% LL1002YB | 8 | 8 | 8.75 | 110.27 | 3.05 | 37 | 1055 | 57.82 | 49.33 | 5.59 | 23.14 | 27.14 | 5.1 |
| 9 | 75% 7740F2 25% 31694 A96 | 5.5 | 5.5 | 8.75 | 78.37 | 3.35 | 34 | 931 | 46.61 | 45.06 | 5.11 | 34.98 | 34.99 | 8.6 |
| 9.1 | 75% 7740F2 25% 31694 A96 | 6 | 6 | 8.75 | 84.26 | 3.3 | 39 | 1010 | 53.4 | 47.58 | 5.39 | 23.53 | 27.05 | 9.2 |
| 10 | 75% Sabic F04660 25% PP | 8 | 8 | 8.75 | 110.27 | 3.2 | 37 | 936 | 59.23 | 56.96 | 6.45 | 17.02 | 23.56 | 4.8 |
| 10.1 | 75% Sabic F04660 25% PP | 8.2 | 8.2 | 8.75 | 111.64 | 3.1 | 36 | 937 | 59.66 | 57.31 | 6.49 | 19.65 | 26.49 | 3.7 |
| (a) | 75% Sabic F04660 25% PP | 8.2 | 8.2 | 8.75 | 111.64 | 3.3 | 37 | 1034 | 71.4 | 62.15 | 7.04 | 19.57 | 27.85 | 4.1 |
| | 75% Sabic F04660 25% PP | 8.2 | 8.2 | 8.75 | 111.64 | 3.35 | 35 | 992 | 66.69 | 60.51 | 6.86 | 17.58 | 21.23 | 3.8 |
| | 75% Sabic F04660 25% PP | 8.2 | 8.2 | 8.75 | 111.64 | 3.35 | 36 | 989 | 69.15 | 62.92 | 7.13 | 18.04 | 21.64 | 3.7 |
| (b) | 75% Sabic F04660 25% PP + UV | 7.9 | 7.9 | 8.5 | 109.6 | 3.1 | 38 | 1002 | 63.5 | 57.03 | 6.46 | 18.54 | 25.81 | 4.2 |
| | 75% Sabic F04660 25% PP + UV | 7.9 | 7.9 | 8.5 | 109.6 | 3.2 | 38 | 978 | 61.1 | 56.23 | 6.37 | 18.56 | 26.74 | 3.9 |
| | 75% Sabic F04660 25% PP + UV | 7.9 | 7.9 | 8.5 | 109.6 | 3.15 | 39 | 996 | 62.59 | 56.56 | 6.41 | 17.74 | 20.05 | 4.2 |
| 11 | 90% Sabic F04660 10% PP | 8 | 8 | 8.75 | 111.64 | 3.1 | 37 | 948 | 58.39 | 55.44 | 6.28 | 16.92 | 24.42 | 4.4 |
| 11.1 | 90% Sabic F04660 10% PP | 8.2 | 8.2 | 8.75 | 111.64 | 2.95 | 44 | 1012 | 59.7 | 53.09 | 6.02 | 16.14 | 30.21 | 3.8 |
| | 80% HDPE Tipelin FS 47102 | | | | | | | | | | | | | |

EP 2 744 656 B1

(continued)

| Sample | Resin | MDX f | MDX 1 | W0 | t0 | W | t | den | Rm, N | Rm cN/tex | Rm g/den | elong Fmax, % | % elong break | % shrink |
|---|---|---|---|---|---|---|---|---|---|---|---|---|---|---|
| 12 | 15% PP Slovnaft HT 306 4.5% CaCO3 Alok FMBA Super F5 0.5% UV Tosaf 0910 PE | 7.8 | 8.4 | 4.75 | 241 | 1.7 | | 1220 | | | 6.38 | 20.5 | 23 | |

Abbreviations used in Table 3 include:

MDXf: Final machine direction orientation ratio after any annealing and/or relaxing the stretched tape calculated from last annealing roll speed divided by cast sheet speed.

MDX1: machine direction orientation ratio based on first Godet roll speed divided by cast sheet speed.

W0: initial width of tape prior to stretching.

t0: initial thickness of tape prior to stretching.

W: final width of tape after stretching.

t: final thickness of tape after stretching.

den: weight in grams of 900 meters of tape [denier of the fiber].

tex: weight in grams of 1000 meters of tape.

Fmax maximum strength of tape expressed in grams.

Rm: maximum strength of tape a expressed in Newtons.

gm/denier strength of tape calculated from Fmax/den.

cN/tex; strength of tape calculated from Rm/tex.

% elong/Fmax: percentage tape elongation maximum strength.

% elong/break: percentage tape elongation at break.

% shrink: % shrinkage of the fiber after exposure to 100°C for two minutes.

Table 4: UV performance of several oriented tapes using SR EN 21898 / Annex A, Lamp B313

| Tape | % rest strength tenacity (100 hrs.) | % rest strength tenacity (200 hrs.) | Test Standard: *Minimum 50% rest strength after 200 hrs.* |
|---|---|---|---|
| Tape #3 100% HDPE - no UV | 74 | 63 | Better than pure PP |
| Tape #2 75HDPE/25 PP 1% UV | 92 | 88 | Much better than pure PP w/ 1.5% |
| Tape #1 75 HDPE/25 PP no UV | 34 | 24 | Worse than calculated value |

Test Methods: Samples were tested using several standard methods listed below.

1. Tensile properties were measured with a separation speed of 250 mm/min and an initial jaw separation of 500 mm, according to EN ISO 13934.

    a. Elongation at break
    b. Ultimate strength (gm/denier)
    c. Elongation at break

2. Tenacity gm/9000m
3. Shrinkage (Following ASTM D - 4974 - 93 and DIN 53866)

    a. 2 minutes @ 100°C

Bag testing was conducted according to DIN EN ISO 21898
UV Weather exposure Tests: SR EN 21898 / Annex A, Lamp B313.

The tensile properties of the tape are measured on a tensile tester by gripping and stretching at a fixed rate (in accordance with ISO 20629 or DIN 53834) and the force to break the tape is measured and reported as the Tenacity (equivalent to the ultimate strength) which is the strength at break for a tape of a specific size. The units of tenacity are gm/denier. The maximum load at break, in grams, is normalized to the cross sectional area of the tape using the denier as opposed to the cross sectional area of the tape. So the tensile force is reported as tenacity in gm/denier.

The total percentage of stretching at which the tape breaks in the tensile test is recorded as the percent elongation at maximum strength (Fmax) and is equivalent to the elongation at break

The tensile properties of the woven cloth are measured by both the (Strip Test according to EN ISO 13934 (DIN 53857) and the MD elongation is determined by the Grab Test according to DIN 53858.

Bag testing included burst tests and burst testing after thirty load cycles were applied to the bag. In these tests the test bags were filled with polymer pellets and suspended by its lifting straps on fixed arms in the test device. A ram was lowered into the bag and the force measured until the bag burst. The force to burst the bag was recorded as well as the type and location of failure. In the cycle testing the bag was preloaded thirty times to a fraction of the bursting load to pre-stress the bag. After the last cycle was complete, the load was increased until the bag burst.

Examples

Comparative Example A: 98.2% Mosten TB002, a 2MFI (@230°C/2.16kg) PP was blended with 0.5% PP79021/20UV (a UV concentrate) and 1% WPT1371 (a 70% $CaCO_3$ concentrate in 3 MFI homopolymer polypropylene) and the blend charged to a single screw extruder fitted with a filter, melt pipe and slot die. The polymer blend was melted at a screw speed of 123 rpm producing approximately 54 kg/hr of melt at a melt temperature of 271°C. The melt pipe and die temperatures were set to 270°C. The melt was then extruded from a slot die with a nominal 0.5mm slot gap, cast downwards into a water bath at approximately 38°C with a die lip to water distance of approximately 50mm. The resulting cast sheet was produced at approximately 52 m/min and was approximately 96 microns thick. The cast sheet was then slit into 30 tapes using knives and the edges removed. The slit tapes were transferred into a hot air oven set to 165/164°C and stretched over a series of Godet rolls at a speed of 325.4 m/min to give a stretch ratio of approximately 6.2:1. The stretched tapes were then conditioned and relaxed approximately 7.8% over several more sets of Godet rolls to give a final tape speed of 300 m/min and a final stretch ratio of approximately 5.7:1. The tapes were wound on bobbins and set aside for testing and weaving.

Three of the thirty bobbins produced were tested. Tapes produced were 2.8 mm wide and 40 microns thick and had an average denier of 898 gm, strength of 6.75 gm/denier, an elongation to break of 20.9% and a residual shrinkage of 6.9%.

Comparative Example B: 98% Sabic FO4660, a 0.7MFI (@190°C/2.16kg) HDPE was blended with 2% WPT1371 and the blend charged to a single screw extruder fitted with a filter, melt pipe and slot die. The polymer blend was melted at a screw speed of 117 rpm producing approximately 60 kg/hr of melt at a melt temperature of 265°C. The melt pipe and die temperatures were set to 260°C. The melt was then extruded from a slot die with a nominal 0.5mm slot gap, cast downwards into a water bath at approximately 35°C with a die lip to water distance of approximately 40mm. The resulting cast sheet was produced at approximately 49.5 m/min and was approximately 73.8 microns thick. The cast sheet was then slit into 30 tapes using knives and the edges removed. The slit tapes were transferred into a hot air oven set to 120/119°C and stretched over a series of Godet rolls at a speed of 321.7 m/min to give a stretch ratio of approximately 6.4:1. The stretched tapes were then conditioned and relaxed approximately 6.7% over several more sets of Godet rolls to give a final tape speed of 300 m/min and a final stretch ratio of approximately 6:1. The tapes were wound on bobbins and set aside for testing and weaving.

Five specimens from one bobbin produced were tested. Tapes produced were 3.1 mm wide and 35 microns thick and had an average denier of 955 gm, strength of 4.76 gm/denier, an elongation to break of 44.53% and a residual shrinkage of 3.5%.

Comparative Example C: Next the blend of Comparative Example B was extruded and cast as in Comparative Example B, but then stretched at various stretch ratios to optimize the properties of the oriented tapes produced from the Sabic FO4660. An optimum in the gm/denier strength and elongation properties was found at a maximum MD stretch ratio (MDX) of approximately 6.5 giving properties of 5.1 to 5.3 gm/denier with an elongation of approximately 13%.

Comparative Example D: Production Sample Tape #3. 98% INEOS ELTEX A4009MFN1325, a 0.9MFI (@190°C/2.16kg) HDPE was blended with 2% WPT1371 and the blend charged to a single screw extruder fitted with a filter, melt pipe and slot die. The polymer blend was melted at a melt pump speed of 42 rpm (screw speed of 40.7 rpm) producing approximately 370 kg/hr of melt at a melt temperature of 264°C. The melt pipe and die temperatures were set to 265°C. The melt was then extruded from a slot die with a nominal 0.5mm slot gap, cast downwards into a water bath at approximately 33°C with a die lip to water distance of approximately 45mm. The resulting cast sheet was produced at approximately 39.3 m/min and was approximately 99.82 microns thick. The cast sheet was then slit into 185 tapes using knives and the edges removed. The slit tapes were transferred into a hot air oven set to 105/105°C and stretched over a series of Godet rolls at a speed of 300.0 m/min to give a stretch ratio of approximately 7.6:1. The stretched tapes were then conditioned and relaxed approximately 0.0% over several more sets of Godet rolls to give a final tape speed of 300 m/min and a final stretch ratio of approximately 7.6:1. The tapes were wound on bobbins and set aside for testing and weaving.

Five specimens each from eight bobbins produced were tested. Tapes produced were 2.8 mm wide and 42 microns thick and had an average denier of 1017 gm, strength of 5.64 gm/denier, an elongation to break of 33.8% and a residual shrinkage of 6.53%.

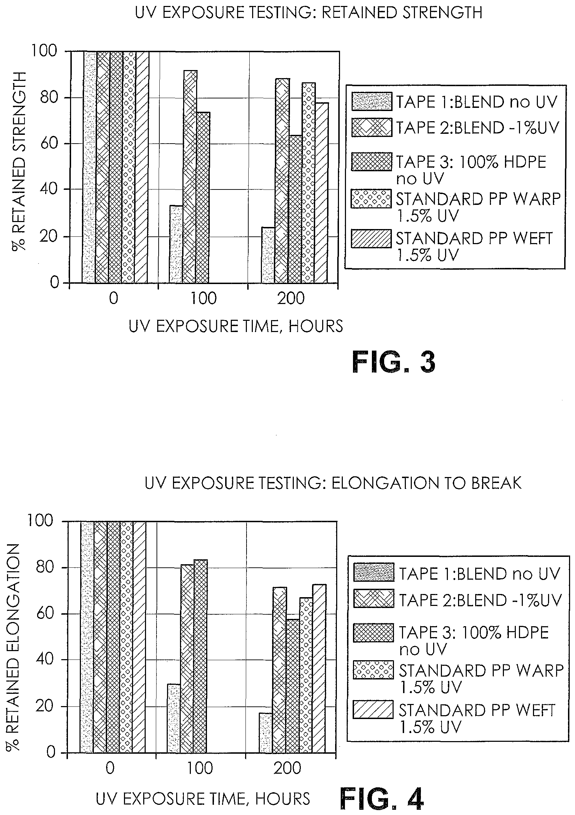

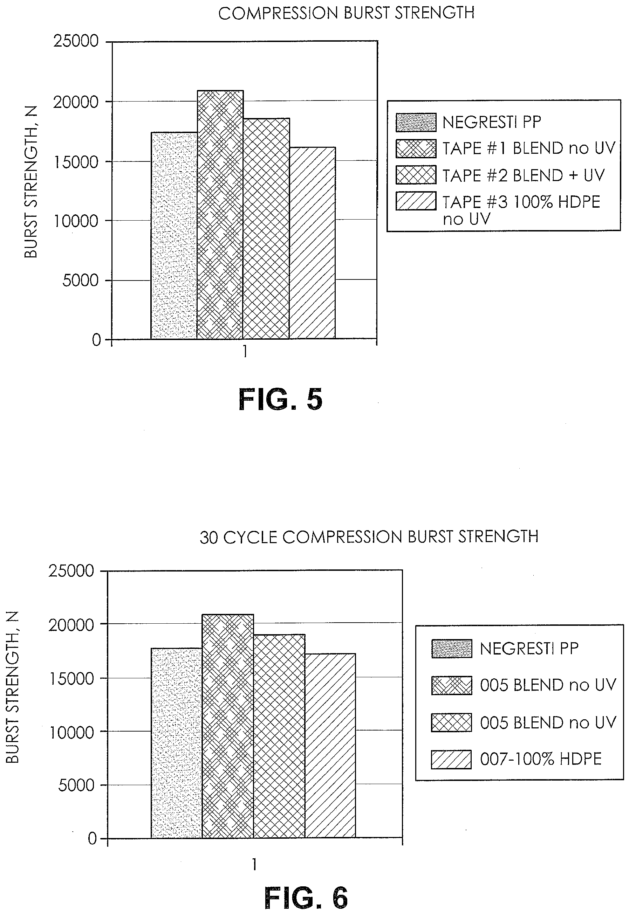

The tapes were woven into fabric which was sewn into bags for testing using DIN EN ISO 21898. The results in Figures 5 and 6 indicate that the Production Sample Tape#3 HDPE bags were comparable in performance to the standard PP bag and had the advantage of lower production cost as it contained no UV additive and had acceptable performance in the UV testing as shown in Figures 3 and 4.

All of the HDPE samples were optimized for properties by varying the MDX and the properties obtained are presented in Figure 1.

Inventive Example 1: Production Sample Tape#1 - HDPE/PP blend. 73% Sabic FO4660, a 0.7MFI (@190°/2.16kg) HDPE was blended with 25% Mosten TB002, a 2MFI (@230°C) PP and 2% WPT1371 and the blend charged to a single screw extruder fitted with a filter, melt pump, melt pipe and slot die. The polymer blend was melted at a melt pump speed of 38.5 rpm (screw speed of 50.9 rpm) producing approximately 330 kg/hr of melt at a melt temperature of 263°C. The melt pipe and die temperatures were set to 260°C. The melt was then extruded from a slot die with a nominal 0.5mm slot gap, cast downwards into a water bath at approximately 35°C with a die lip to water distance of approximately 40mm. The resulting cast sheet was produced at approximately 36.2 m/min and was approximately 111.64 microns thick. The cast sheet was then slit into 165 tapes using knives and the edges removed. The slit tapes were transferred into a hot air oven set to 125/124°C and stretched over a series of Godet rolls at a speed of 300.0 m/min to give a stretch ratio of approximately 8.2:1. The stretched tapes were then conditioned and relaxed approximately 0.0% over several more sets of Godet rolls to give a final tape speed of 330 m/min and a final stretch ratio of approximately 8.2:1. The tapes were wound on bobbins and set aside for testing and weaving.

Five specimens each from eight bobbins produced were tested. Tapes produced were 3.3 mm wide and 35 microns thick and had an average denier of 1005 gm, stretch of 7.01 gm/denier, an elongation to break of 23.6% and a residual shrinkage of 3.7%. This demonstrates the superior physical properties which can be produced from the blends as compared to 100% PP and 100% HDPE in Comparative Examples A, B, and C.

The Sample #1 blend without UV additive showed unacceptable UV aging performance (Figures 3 and 4).

The tapes were woven into fabric which was sewn into bags for testing using DIN EN ISO 21898. The results in Figures 5 and 6 indicate that the Production Sample Tape#1 - HDPE/PP blend with no UV concentrate bags were superior in performance to the standard PP bag.

Inventive Example 2: Production Sample Tape #2 - HDPE/PP blend + UV concentrate. 75% of Sabic FO4660, a 0.7MFI (@190°C/2.16kg) HDPE was blended with 25% Mosten TB002, a 2MFI (@230°C) PP, 1.0% PP79021/20UV (a 20% UV concentrate in 11 MFI homopolymer polypropylene) and 2% WPT1371 and the blend charged to a single screw extruder fitted with a filter, melt pump, melt pipe and slot die. The polymer blend was melted at a melt pump speed of 38.5 rpm (screw speed of 50.9 rpm) producing approximately 330 kg/hr of melt at a melt temperature of 263°C. The melt pipe and die temperatures were set to 260°C. The melt was then extruded from a slot die with a nominal 0.5mm slot gap, cast downwards into a water bath at approximately 30°C with a die lip to water distance of approximately 40 mm. The resulting cast sheet was produced at approximately 37.5 m/min and was approximately 109.57 microns thick. The cast sheet was then slit into 185 tapes using knives and the edges removed. The slit tapes were transferred into a hot air oven set to 125/124°C and stretched over a series of Godet rolls at a speed of 300.0 m/min to give a stretch ratio of approximately 7.9:1. The stretched tapes were then conditioned and relaxed approximately 0.0% over several more sets of Godet rolls to give a final tape speed of 300 m/min and a final stretch ratio of approximately 7.9:1. The tapes were wound on bobbins and set aside for testing and weaving.

Five specimens each from nine bobbins produced were tested. Tapes produced were 3.1 mm wide and 39 microns thick and had an average denier of 992 gm, stretch of 6.41 gm/denier, an elongation to break of 24.9% and a residual shrinkage of 4.0%. This indicates that the addition of UV concentrate decreases the physical properties of the oriented tapes (well known for the 100% PP tapes). But as shown in Table 4, the UV stability of the blends with 1% UV concentrate are better than the pure PP UV stability at 1.5% UV concentrate, this demonstrates that the blends can be produced with lower percentages of UV additive which represents a material cost reduction and is an additional advantage of the blends relative to 100% PP tapes.

The Sample #2 blend with 1% UV additive showed comparable to better UV stability than the Standard PP tape with 1.5% UV additive (Figures 3 and 4).

The tapes were woven into fabric which was sewn into bags for testing using DIN EN ISO 21898. The results in Figures 5 and 6 indicate that the Production Sample Tape#2 - HDPE/PP blend + UV concentrate bags were superior in performance to the standard PP bag.

Inventive Example 3: HDPE/PP blend. 83.5% of Sabic FO4660, a 0.7MFI (@190°C/2.16kg) HDPE was blended with 15% Mosten TB002, a 2MFI (@230°C) PP, 0.5% PP79021/20UV (a UV concentrate) and 1% WPT1371 and the blend charged to a single screw extruder fitted with a filter, melt pipe and slot die. The polymer blend was melted at a screw speed of 138 rpm producing approximately 54 kg/hr of melt at a melt temperature of 272°C.

The melt pipe and die temperatures were set to 270°C. The melt was then extruded from a slot die with a nominal 0.5mm slot gap, cast downwards into a water bath at approximately 38°C with a die lip to water distance of approximately 40mm. The resulting cast sheet was produced at approximately 37.5 m/min and was approximately 111.00 microns thick. The cast sheet was then slit into 30 tapes using knives and the edges removed. The slit tapes were transferred into a hot air oven set to 125/124°C and stretched over a series of Godet rolls at a speed of 317.2 m/min to give a stretch ratio of approximately 8.5:1. The stretched tapes were the conditioned and relaxed approximately 5.38% over several more sets of Godet rolls to give a final tape speed of 300 m/min and a final stretch ratio of approximately 8.0:1. The tapes were wound on bobbins and set aside for testing and weaving.

Five specimens each from three bobbins produced were tested. Tapes produced were 3.1 mm wide and 39 microns thick and had an average denier of 922 gm, stretch of 6.51 gm/denier, an elongation to break of 25.8% and a residual shrinkage of 1.25%.

The Sample #3 tape with no UV additive showed superior UV stability relative to Sample #1 and exceeded the minimum acceptable property retention of 50% for both the tape strength and % Elongation as shown in Figure 3 and 4.

Inventive Example 4: alternative HDPE continuous phase resin. 83.5% Borealis VS5580, a 0.95MFI (@190°C/2.16kg) HDPE was blended with 15% Mosten TB002, a 2MFI (@230°C) PP, 0.5% PP79021/20UV (a UV concentrate) and 1% WPT1371 and the blend charged to a single screw extruder fitted with a filer, melt pipe and slot die. The polymer blend was melted at a screw speed of 127 rpm producing approximately 54 kg/hr of melt at a melt temperature of 271°C. The melt pipe and die temperatures were set to 270°C. The melt was then extruded from a slot die with a nominal 0.5mm slot gap, cast downwards into a water bath at approximately 38°C with a die lip to water distance of approximately 40 mm. The resulting cast sheet was produced at approximately 37.5 m/min and was approximately 105.66 microns thick. The cast sheet was then slit into 30 tapes using knives and the edges removed. The slit tapes were transferred into a hot air oven set to 125/124C and stretched over a series of Godet rolls at a speed of 307.3 m/min to give a stretch ratio of approximately 8.2:1. The stretched tapes were then conditioned and relaxed approximately 2.35% over several more sets of Godet rolls to give a final tape speed of 300 m/min and a final stretch ratio of approximately 8.0:1. The tapes were wound on bobbins and set aside for testing and weaving.

Five specimens each from three bobbins produced were tested. Tapes produced were 3.1 mm wide and 39 microns thick and had an average denier of 890 gm, strength of 6.54 gm/denier, an elongation to break of 26.8% and a residual shrinkage of 3.70%.

Inventive Example 5: Alternative PP Dispersed phase resin. 83.5% Sabic FO4660, a 0.7MFI (@190°C/2.16kg) HDPE was blended with 15% Reliance H030SG, a 3MFI (@230°C) PP, 0.5% PP79021/20UV (a UV concentrate) and 1% WPT1371 and the blend charged to a single screw extruder fitted with a filter, melt pipe and slot die. The polymer blend was melted at a screw speed of 128 rpm producing approximately 54 kg/hr of melt at a melt temperature of 271°C. The melt pipe and die temperatures were set to 270°C. The melt was then extruded from a slot die with a nominal 0.5mm slot gap, cast downwards into a water bath at approximately 35°C with a die lip to water distance of approximately 40mm. The resulting cast sheet was produced at approximately 37.1 m/min and was approximately 106.99 microns thick. The cast sheet was then slit into 30 tapes using knives and the edges removed. The slit tapes were transferred into a hot air oven set to 125/125°C and stretched over a series of Godet rolls at a speed of 307.3 m/min to give a stretch ratio of approximately 8.2:1. The stretched tapes were then conditioned and relaxed approximately 2.35% over several more sets of Godet rolls to give a final tape speed of 300 m/min and a final stretch ratio of approximately 8.0:1. The tapes were wound on bobbins and set aside for testing and weaving.

Five specimens each from three bobbins produced were tested. Tapes produced were 3.1 mm wide and 39 microns thick and had an average denier of 922 gm, strength of 6.43 gm/denier, an elongation to break of 27.4% and a residual shrinkage of 2.8%.

Comparative Example E: alternative HDPE continuous phase resin. 83.5 wt% Basell APC7440 $F_2$, a 1.8MFI (190°C /5kg) HDPE was blended with 15 wt% Mosten TB002, a 2MFI (2.16kg/230°C) PP, 0.5% PP79021/20UV (a UV concentrate) and 1% WPT1371 and the blend charged to a single screw extruder fitted with a filter, melt pipe and slot die. The polymer blend was melted at a screw speed of approximately 128 rpm producing approximately 54 kg/hr of melt at a melt temperature of approximately 271°C. The melt pipe and die temperatures were set to 270°C. The melt was then extruded from a slot die with a nominal 0.5mm slot gap, cast downwards into a water bath at approximately 35°C with a die lip to water distance of approximately 40 mm. The resulting cast sheet was produced at approximately 37.1 m/min. The cast sheet was then slit into 30 tapes using knives and the edges removed. The slit tapes were transferred into a hot air oven set to 125/125°C and stretched over a series of Godet rolls at a stretch ratio of approximately 6.0:1. The blend ran poorly on the orienting equipment giving relatively low strengths of 6.0 gm/denier @25% elongation and continuous tape breaks. The test was stopped and no bobbins were produced for testing and weaving.

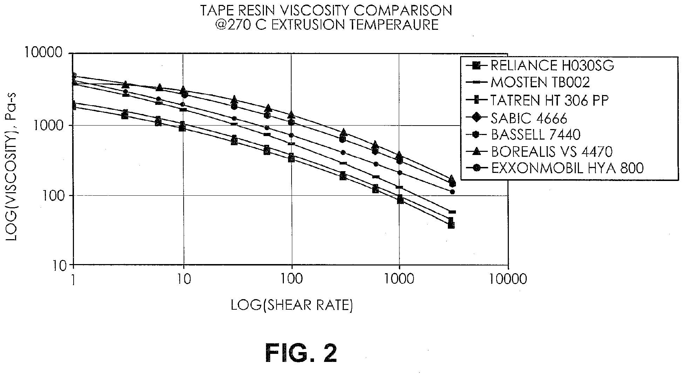

It is believed that this comparative example E indicates that the high viscosity of the APC 7440 F2 (Figure 2) is overdispersing the lower viscosity Mosten TB002 and does not result in the characteristics of Inventive Examples 1 through 5. The relative success of the Sabic 4660 in dispersing the Mosten TP002 and the Reliance H030SG PP resins defines a viscosity ratio range for successful creation of the fibrous PP morphology. Based on this successful viscosity range defined it should be possible to select a suitable viscosity PP grade for use with the Basell APC 7440 F2 resin to further increase tape properties. Aside from the measurement of viscosity properties shown in Figure 2, the MFI was measured at 190°C but using a 5 kg weight for the test instead of the standard 2.16 kg, indicating the high molecular weight of the APC 7440 F2 resin.

Validation Testing. Having completed several runs on various pieces of commercial scale processing equipment it is clear that there is a melt processing interaction between the HDPE and PP where the resin combination determines the final physical properties of the oriented tapes and therefore woven fabric properties.

The test runs have achieved successful production of tapes with a lower HDPE MI, (viscosity) range than was previously believed. The resin experiment defines the range of acceptable combinations of HDPE and PP based on average resin viscosity (MI and MF). During the course of the program, the melt viscosity of the various HDPE and PP resins have been measured to improve our understanding of the melt viscosity impact of the component resins on the blending effects.

The operational hypothesis for the blend property development is that the bulk melt phase (HDPE) viscosity disperses the dispersed phase (PP) melt into fibrils which are then cold stretched at HDPE stretching temperatures giving superior tape properties than the bulk HDPE phase would develop. It is believed that if the HDPE bulk phase viscosity is unable to produce the melt fibrils of PP then the tape properties will not be better than the HDPE tapes. This low strength HDPE/PP blend tape could occur if the HDPE viscosity is much higher than the PP melt viscosity resulting in a spherical PP dispersed phase of small diameter, or if the PP viscosity is much lower than the HDPE viscosity resulting in a large diameter spherical PP dispersed phase. The results of the experiment would support this hypothesis.

In part the suitability of the HDPE/PP resin blend is impacted by the (1) stretch ratio, (2) stretch temperature, (3) water bath to die quenching configuration and (4) the interaction between line speed and oven temperatures.

The water bath temperature also affects operability, particularly at start up. In addition, due to the low COF of HDPE to steel, the number of Godet rolls clearly affects the uniformity of the tape properties (8 rolls being insufficient for uniform stretching, and 10 rolls appearing to work quite well). There may also be an impact of the extruder barrel temperature profile on the PP domain morphology (shape) however.

Process conditions for the Resin experiment were determined with the blend of Sabic FO4660 HDPE/Tipelin FS 471-02 at a blend ratio of 82.5% HDPE/ 15% PP with the addition of 0.5% UV additive and 2% CaCO3 concentrate. Once optimum conditions are determined for the standard blend, the HDPE and PP resin MI and MF were be varied to explore the significance of each on final tape properties. In particular the resin experiment will be a $2^2$ design with a center point [see Table 5].

The process impact on tape properties were examined independently from the resin viscosity ranges in a separate Box-Behnken design.

Experimental. Materials:

|  |  |  |
|---|---|---|
| Sabic FO4660 | 0.6 MI | HDPE |
| Borealis VS 4470 | 0.65 | HDPE |
| Hostalen GC7255 | 4.0 MI | HDPE |
| Moplen HP556E | 0.8 MF | PP |
| Tipelin FS 471-02 | 1.8 [MFI @ 5 kg /190°C] | HDPE ∼ 0.2 MI |
| Moplen HP420M | 8.0 MF | PP |

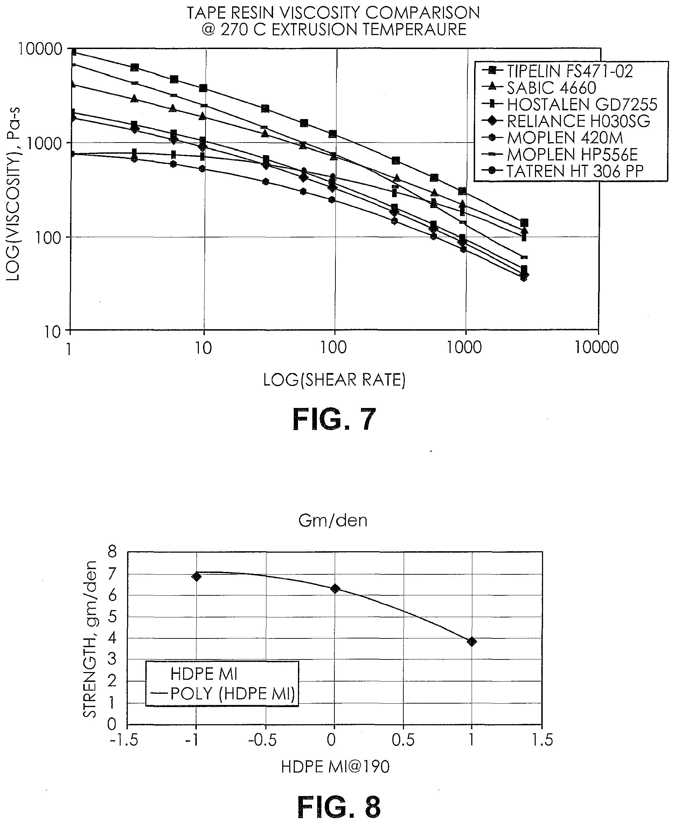

The comparative resin viscosities are displayed in Figure 7 at 270°C.

Resin Experiment. The invention teaches range of 0.3 to 3.5 MI for HDPE and 0.5 to 8.0 MF for the PP. This experiment will explore the ranges of the HDPE MI and PP MF in a $2^2$ design with a center point. Table 5 lists the treatment combinations and resins in design order. The order of runs is random.

During the run the same PP resin was used the HDPE resin was varied.

Table 5: Experimental plan in design order

| Treatment combination | Variable 1 HDPE MI | Variable 2 PP MF | 85% HDPE | 15% PP | Test Number |
|---|---|---|---|---|---|
| 1 | -1 | -1 | Tipelin FS 471-02 | Moplen HP556E | 1 |
| a | +1 | -1 | Hostalen GC7255 | Moplen HP556E | 2 |

(continued)

| Treatment combination | Variable 1 HDPE MI | Variable 2 PP MF | 85% HDPE | 15% PP | Test Number |
|---|---|---|---|---|---|
| b | -1 | +1 | Tipelin FS 471-02 | Moplen HP420M | 3 |
| ab | +1 | +1 | Hostalen GC7255 | Moplen HP420M | 4 |
| CP | 0 | 0 | Sabic FO4660 | Reliance H030SG | 5 |

The combination of the 4 MI HDPE and 8 MF PP yielded no stretched tapes. However, for the purpose of the analysis the results for the 4 MI HDPE were substituted based on the assumption they represent the properties of the HDPE without the reinforcing effect of the dispersed PP. If the product had been successfully made one could presume that the base HDPE tape properties represented by test 2 [Treatment combination (a)] would have been obtained.

An additional test of the ExxonMobil HSY-800 (0.60 MI HDPE) with the 8 MF Hostalen GC7255, produced before the other resins were produced, yielded results where the HDPE strength was not enhanced by the PP addition indicating that the high MF PP phase was likely overdispersed to spherical domains as opposed to the desired fibrils of the patent.

Table 6: Polymer data sheet properties for use in the resin experiment.

| Treatment | MF | Density | Polymer Grade |
|---|---|---|---|
| HDPE (-1) | 0.17 | 0.946 | Tipelin FS 471-02 C6 comonomer all else are butene |
| HDPE (+1) | 4.0 | 0.955 | Hostalen GC7255 |
| PP (-1) | 0.8 | 0.900 | Moplen HP556E |
| PP(+1) | 8.0 | 0.900 | Moplen HP420M |
| CP HDPE (0) | 0.7 | 0.961 | Sabic FO4660 |
| CP PP (0) | 2.0 - 3.0 | 0.900 | Reliance 030SG |

## Conduct of the Resin experiment:

At the start of the run, the Sabic FO4660 resins are blended with the Reliance H030SG PP resin and 2% CaCO3 and 0.5% UV concentrates to establish a starting point for the run and establish the center point for the designed experiment. Tape dimensions for the target fabric were determined as 900 den, tape width of 2.5 mm and the knife width set to 7.29 mm and the target sheet thickness at 0.123 mm. Warp tapes (not fibrillated) were produced. At this point the purpose was to determine the effect of resin changes.

Summary of the process conditions are as follows in Table 7.

Table 7: Process conditions established of the center point resin formulation and maintained for the remainder of the blend experiment.

| Extruder temps, °C | 242 | 250 | 255 | 255 | 255 | 255 | Extruder Speed 45.3 rpm |
|---|---|---|---|---|---|---|---|
| Filter temp, °C | 240 | Pump, °C | 253 | Die zone temps, °C | 255 | Pump speed | 31.9 rpm |
| Oven temp °C | 125 | Godot temps °C | 110/110 | Final Stretch ratio | 8.5:1 | Initial stretch ratio | 9.0:1 |
| Speeds, M/min | casting 22.7 | Slitting section 23.5 | Stretch Godots 212.6 | Annealing Godots 204.0 | Final speed 200 | relaxation | 2%/4% /6% |

(continued)

| Extruder temps, °C | 242 | 250 | 255 | 255 | 255 | 255 | Extruder Speed 45.3 rpm |
|---|---|---|---|---|---|---|---|
| Water bath temp, °C | 39 | Die/WB distance, mm | 30 | | | | |

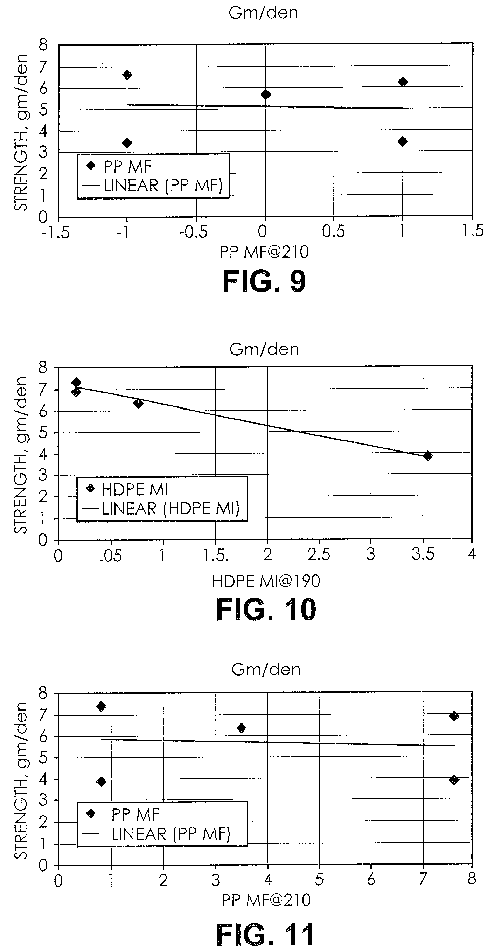

Results. The results obtained are presented in Table 8. The key finding is that the HDPE resin MI has a significant impact on tape properties (Figure 8) and the PP MF has no significant impact on tape properties (Figure 9).

Also from Figure 8 we see that there is some curvature in the tape strength vs. HDPE when plotted in design units (-1, 0, 1). The regression results in Design units, for Figures 8 and 9 are given as Equation 1 and Equation 2 and the regression $R^2$ values show good agreement in the correlations.

Equation 1: Tape strength vs. HDPE MI (190°C, 2.16 kgm); *in design units x = (-1, 0, 1).*

$$\text{Tape gm/den} = -0.845x^2 - 1.615x + 6.31 \qquad R^2 = 0.9879$$

Equation 2: Tape % Elongation vs. HDPE MI (190°C, 2.16 kgm); *in design units x = (-1, 0, 1).*

$$\% \text{ Elongation} = 5.2525x + 21.903 \qquad R^2 = 0.9971$$

Therefore, it becomes apparent that the HDPE as the continuous phase is controlling the morphology of the PP phase which then develops the improved blend properties. The PP, while important for the development of the tape properties, does not control the overall development of the tape properties.

Consequently, the most significant range for the patent application will be the HDPE MI range, while the PP MF range can be broadened somewhat to represent its interaction with the continuous phase.

To determine the optimum HDPE MI range Figures 10 and 11 are used, which are plotted in terms of actual HDPE MI values to set a target tape strength and % elongation with solution of the appropriate regression equations (Equation 3 and Equation 4) for the optimum HDPE MI.

Equation 3: Tape strength vs. HDPE MI (190°C, 2.16 kgm)

$$\text{Tape gm/den} = -0.9439[MI] + 7.1782 \qquad R^2 = 0.9851$$

Equation 4: Tape % Elongation vs. HDPE MI (190°C, 2.16 kgm)

$$\% \text{ Elongation} = 2.8903[MI] + 17.175 \qquad R^2 = 0.9296$$

For example for minimum target tape strength of 5.5 gm/den, the HDPE MI should be:

$$\text{MI} = (5.5 \text{ gm/den} - 7.1782\text{gm/den}) / (-0.9439 \text{ gm/den/MI}) = 1.78 \text{ MI}$$

This gives a tape elongation of 22% for the annealing conditions of the experiment.

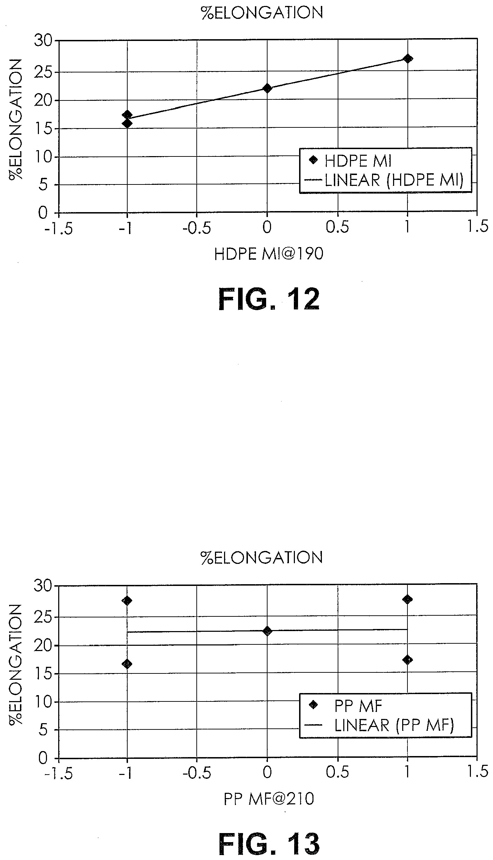

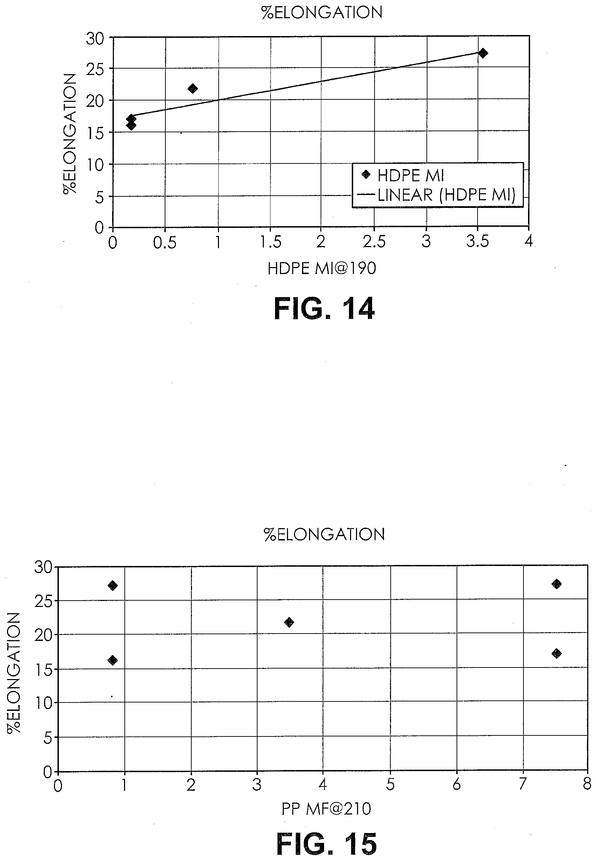

Figures 12 and 13 display the % elongation in design units while Figures 14 and 15 display the % elongation in HDPE MI and PP MF units respectively.

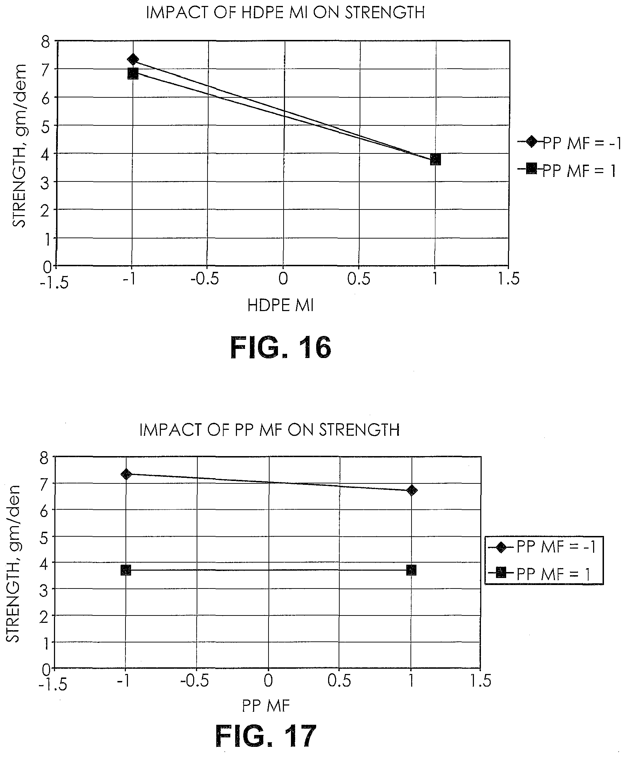

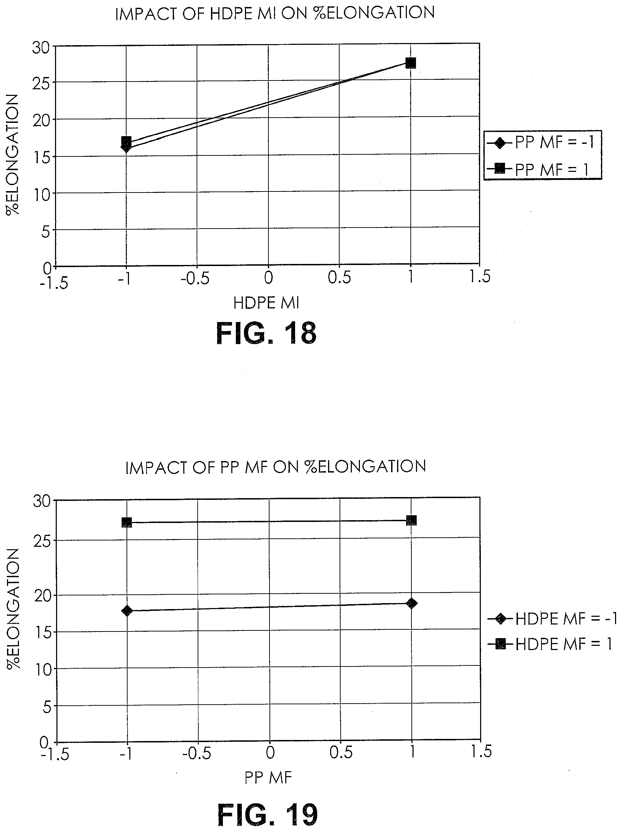

Figures 16 and 17 display the cross plots (without the center point) of tape strength vs. HDPE MI and PP MF respectively and Figures 18 and 19 displays the cross plots of % Elongation vs. HDPE MI and PP MF respectively

Table 8: Experimental run and results obtained for the tapes produced.

| TC | Variable 1 HDPE MI | Variable 2 PP MF | Variable 1 HDPE MI | Variable 2 PP MF | 82.5% HDPE | 15% PP | denier | STDEV | gm/den | STDEV | % elong | STDEV |
|---|---|---|---|---|---|---|---|---|---|---|---|---|
| CP | 0 | 0 | 0.76 | 3.47 | Sabic F04660 | Repol H030SG | 918 | 38 | 6.63 | 0.16 | 22.85 | 2.04 |
| 1 | -1 | -1 | 0.17 | 0.82 | Tipelin FS 471-02 | Moplen HP556E | 1053 | 54 | 7.34 | 0.46 | 16.32 | 2.49 |
| a | 1 | -1 | 3.54 | 0.82 | Hostalen GC7255 | Moplen HP556E | 92 0 | 106 | 3.85 | 0.36 | 27.2 | 8.93 |
| b | -1 | 1 | 0.17 | 7.5 | Tipelin FS 471-02 | Moplen HP420M | 955 | 90.2 | 6.82 | 0.34 | 17.07 | 1.85 |
| ab | 1 | 1 | 3.54 | 7.5 | Hostalen GC7255 | Moplen HP420M | 920 | 106 | 3.85 | 0.36 | 27.2 | 8.93 |
| CP | 0 | 0 | 0.76 | 3.47 | Exxon HYA-800 | Reliance H030SG | 938 | | 5.99 | | 20.6 | |

**Claims**

1.  An oriented polyolefin tape comprising an extruded and stretched melt blend comprising the components:

    (a) 5 to 35 wt% 0.5-8 melt flow index (MFI; 230°C/2.16kg) homopolypropylene,
    (b) 65 to 95 wt% 0.1-3.5 MFI (190°C/2.16kg) of high density polyethylene,
    (c) 0-30 wt% of at least one filler,
    (d) 0-3 wt% of at least one UV additive, and
    (e) 0-5 wt% of at least one compatibilizer to form a melt blend,

    wherein the at least one filler is present in an amount of 0.1-20 wt% of the melt blend.

2.  The tape of claim 1, wherein the polypropylene has a MFI at 230°C/2.16kg of 1-7.

3.  The tape of claim 1, wherein the high density polyethylene has a MFI at 190°C/2.16kg of 0.1-3.

4.  The tape of claim 1, wherein the polypropylene has a density of 0.890.-0.946 g/cm$^3$.

5.  The tape of claim 1, wherein the high density polyethylene has a density of 0.941-0.997 g/cm$^3$.

6.  The tape of claim 1, wherein the polypropylene is syndiotactic.

7.  The tape of claim 1, wherein the polypropylene is isotactic.

8.  The tape of claim 1, wherein the polypropylene is present to an extent of 10-30 wt% and high density polyethylene is present to an extent of 70-90 wt-%.

9.  The tape of claim 1 having a thickness of less than 300 μm.

10. The tape of claim 1 having a residual shrinkage of less than 10 %.

11. A product comprising a plurality of the tapes of claim 1.

12. The product of claim 11, wherein the product is selected from the group consisting of woven cloth, packages, bags, FIBC bags, shipping sacks, dunnage bags, ground cover, geotextiles, straps and ropes.

13. The product of claim 11, wherein the product further comprises electrically conductive filaments including conductivity increasing additives to render the product electrically conductive.

14. A process of making an oriented polyolefin tape according to claims 1 to 10 comprising:

    (a) melt blending

        (i) 5-35 wt% 0.5-8 MFI (230°C/2.16kg) homopolypropylene,
        (ii) 65-95 wt% 0.1-3.5 MFI (190°C/2.16kg) high density polyethylene,
        (iii) 0.1-20 wt% of at least one filler,
        (iv) 0-3 wt% of at least one UV additive,
        (v) and 0-5 wt% of at least one compatibilizer to form a melt blend,

    (b) extruding the melt blend at 220-295 °C through a die to form an extrudate,
    (c) water quenching the extrudate,
    (d) slitting the extrudate to form at least one tape, and
    (e) heating and stretching the at least one tape at 50-500 m/min and 80-140 °C.

**Patentansprüche**

1.  Orientiertes Polyolefinband, umfassend eine extrudierte und gestreckte Schmelzmischung, umfassend die Komponenten:

(a) 5 bis 35 Gew.-% Homopolypropylen mit Schmelzflussindex 0,5-8 (MFI; 230 °C/2,16 kg),
(b) 65 bis 95 Gew.-% Polyethylen hoher Dichte mit MFT 0,1-3,5 (190 °C/2,16 kg),
(c) 0-30 Gew.-% mindestens eines Füllstoffs,
(d) 0-3 Gew.-% mindestens eines UV-Additivs und
(e) 0-5 Gew.-% mindestens eines Kompatibilisators, um eine Schmelzmischung zu bilden,

wobei der mindestens eine Füllstoff in einer Menge von 0,1-20 Gew.-% der Schmelzmischung vorhanden ist.

2. Band nach Anspruch 1, worin das Polypropylen ein MFI bei 230 °C/2,16 kg von 1-7 aufweist.

3. Band nach Anspruch 1, worin das Polyethylen hoher Dichte ein MFI bei 190 °C/2,16 kg von 0,1-3 aufweist.

4. Band nach Anspruch 1, worin das Polypropylen eine Dichte von 0,890-0,946 g/cm$^3$ aufweist.

5. Band nach Anspruch 1, worin das Polyethylen hoher Dichte eine Dichte von 0,941-0,997 g/cm$^3$ aufweist.

6. Band nach Anspruch 1, worin das Polypropylen syndiotaktisch ist.

7. Band nach Anspruch 1, worin das Polypropylen isotaktisch ist.

8. Band nach Anspruch 1, worin das Polypropylen in einem Bereich von 10-30 Gew.-% und Polyethylen hoher Dichte in einem Bereich von 70-90 Gew.-% vorhanden ist.

9. Band nach Anspruch 1 mit einer Dicke von weniger als 300 μm.

10. Band nach Anspruch 1 mit einer Restschrumpfung von weniger als 10 %.

11. Produkt, umfassend eine Vielzahl der Bänder nach Anspruch 1.

12. Produkt nach Anspruch 11, worin das Produkt ausgewählt ist aus der Gruppe bestehend aus Gewebe, Verpackungen, Beuteln, FIBC-Taschen, Versandsäcken, Staupolster, Bodenbedeckung, Geotextilien, Gurten und Seilen.

13. Produkt nach Anspruch 11, worin das Produkt ferner elektrisch leitfähige Filamente einschließlich leitfähigkeitssteigernder Additive umfasst, um das Produkt elektrisch leitfähig zu machen.

14. Verfahren zur Herstellung eines orientierten Polyolefinbandes nach den Ansprüchen 1 bis 10, umfassend:

(a) Schmelzmischen

(i) 5-35 Gew.-% Homopolypropylen mit 0,5-8 MFI (230 °C/2,16 kg),
(ii) 65-95 Gew.-% Polyethylen hoher Dichte mit 0,1-3,5 MFI (190 °C/2,16 kg),
(iii) 0,1-20 Gew.-% mindestens eines Füllstoffs,
(iv) 0-3 Gew.-% mindestens eines UV-Additivs,
(v) und 0-5 Gew.-% mindestens eines Kompatibilisators, um eine Schmelzmischung zu bilden,

(b) Extrudieren der Schmelzmischung bei 220-295 °C durch eine Düse, um ein Extrudat zu bilden,
(c) Wasserabschrecken des Extrudats,
(d) Schneiden des Extrudats, um mindestens ein Band zu bilden, und
(e) Erwärmen und Strecken des mindestens einen Bandes bei 50-500 m/min und 80-140 °C.

## Revendications

1. Ruban de polyoléfine orienté comprenant un mélange fondu extrudé et étiré comprenant les composants suivants:

(a) 5 à 35 % en poids d'homopolypropylène ayant un indice de fluidité à chaud de 0,5-8 (MFI ; 230°C/2,16 kg),

(b) 65 à 95 % en poids de polyéthylène haute densité de 0,1-3,5 MFI (190°C/2,16 kg),
(c) 0-30 % en poids d'au moins une charge,
(d) 0-3 % en poids d'au moins un additif UV, et
(e) 0 à 5 % en poids d'au moins un agent de compatibilité pour former un mélange fondu,

dans lequel la au moins une charge est présente en quantité de 0,1 à 20 % en poids du mélange fondu.

2. Le ruban selon la revendication 1, dans lequel le polypropylène a une MFI à 230°C/2,16 kg de 1-7.

3. Le ruban selon la revendication 1, dans lequel le polyéthylène haute densité a une MFI à 190°C/2,16 kg de 0,1-3.

4. Le ruban selon la revendication 1, **caractérisé en ce que** le polypropylène a une densité de 0,890 à 0,946 g/cm$^3$.

5. Le ruban selon la revendication 1, dans lequel le polyéthylène haute densité a une densité de 0,941-0,997 g/cm$^3$.

6. Le ruban selon la revendication 1, dans lequel le polypropylène est syndiotactique.

7. Le ruban selon la revendication 1, **caractérisé en ce que** le polypropylène est isotactique.

8. Le ruban selon la revendication 1, dans lequel le polypropylène est présent à raison de 10 à 30 % en poids et le polyéthylène haute densité est présent à raison de 70 à 90 % en poids.

9. Le ruban selon la revendication 1 ayant une épaisseur inférieure à 300 $\mu$m.

10. Le ruban selon la revendication 1 ayant un retrait résiduel inférieur à 10 %.

11. Produit comprenant une pluralité de rubans selon la revendication 1.

12. Le produit selon la revendication 11, dans lequel le produit est choisi dans le groupe constitué par des sacs tissés, des emballages, des sacs, des sacs FIBC, des sacs d'expédition, des sacs de fardage, des couvre-sols, des géotextiles, des sangles et des cordes.

13. Le produit selon la revendication 11, dans lequel le produit comprend en outre des filaments électriquement conducteurs comprenant des additifs augmentant la conductivité pour rendre le produit électriquement conducteur.

14. Procédé de fabrication d'une bande de polyoléfine orientée selon les revendications 1 à 10 comprenant:

(a) le mélange à l'état fondu

(i) 5-35 % en poids d'homopolypropylène 0,5-8 MFI (230°C/2,16kg),
(ii) 65 à 95 % en poids de polyéthylène haute densité 0,1-3,5 MFI (190°C/2,16 kg),
(iii) 0,1-20 % en poids d'au moins une charge,
(iv) 0-3 % en poids d'au moins un additif UV,
(v) et 0 à 5 % en poids d'au moins un agent de compatibilité pour former un mélange fondu,

(b) l'extrusion du mélange fondu à 220-295 °C à travers une buse pour former un extrudat,
(c) la trempe à l'eau de l'extrudat,
(d) le refendage de l'extrudat pour former au moins une bande, et
(e) le chauffage et l'étirage d'au moins une bande à 50-500 m/min et 80-140 °C.

**FIG. 1**

TAPE RESIN VISCOSITY COMPARISON
@270 C EXTRUSION TEMPERAURE

FIG. 2

UV EXPOSURE TESTING: RETAINED STRENGTH

**FIG. 3**

UV EXPOSURE TESTING: ELONGATION TO BREAK

**FIG. 4**

COMPRESSION BURST STRENGTH

**FIG. 5**

30 CYCLE COMPRESSION BURST STRENGTH

**FIG. 6**

TAPE RESIN VISCOSITY COMPARISON
@ 270 C EXTRUSION TEMPERAURE

LOG(VISCOSITY), Pa-s

LOG(SHEAR RATE)

- TIPELIN FS471-02
- SABIC 4660
- HOSTALEN GD7255
- RELIANCE H030SG
- MOPLEN 420M
- MOPLEN HP556E
- TATREN HT 306 PP

**FIG. 7**

Gm/den

STRENGTH, gm/den

HDPE MI
—POLY (HDPE MI)

HDPE MI@190

**FIG. 8**

Gm/den

**FIG. 9**

Gm/den

**FIG. 10**

Gm/den

**FIG. 11**

%ELONGATION

FIG. 12

%ELONGATION

FIG. 13

%ELONGATION

HDPE MI@190

## FIG. 14

%ELONGATION

PP MF@210

## FIG. 15

IMPACT OF HDPE MI ON STRENGTH

**FIG. 16**

IMPACT OF PP MF ON STRENGTH

**FIG. 17**

IMPACT OF HDPE MI ON %ELONGATION

FIG. 18

IMPACT OF PP MF ON %ELONGATION

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010152391 A